# EUROPÄISCHE PATENTSCHRIFT

(11) **EP 0 338 563 B1**
(45) Veröffentlichungstag und Bekanntmachung des Hinweises auf die Patenterteilung: **11.08.1993**
(21) Anmeldenummer: 89107150.8
(22) Anmeldetag: 20.04.1989
(51) Int. Cl.: B23K 9/20

(54) **Bolzenschweisspistole**
Stud welding pistol
Pistolet à sondage des goujons

(30) Priorität: 20.04.1988 DE 3813292
(43) Veröffentlichungstag der Anmeldung: 25.10.1989
(73) Patentinhaber: Bolzenschweisstechnik Heinz Soyer GmbH, D-82237 Wörthsee (DE)
(72) Erfinder: Soyer, Heinz, Sen., D-8031 Wessling (DE); Reiter, Johann, D-8031 Hechendorf (DE)
(74) Vertreter: von Kirschbaum, Albrecht, Dipl.-Ing.

(56) Entgegenhaltungen:
- EP-A- 0 235 747
- DE-A- 2 818 969
- DE-A- 3 340 159
- DE-B- 2 516 407

## Beschreibung

Die Erfindung betrifft eine Bolzenschweißpistole nach dem Oberbegriff des Anspruchs 1.

Solche Bolzenschweißpistolen werden dazu verwendet, um einen Schweißbolzen unter Zünden eines Lichtbogens auf ein Werkstück aufzuschweißen. Zum Anvisieren der Stelle, auf welche der Bolzen aufzuschweißen ist, wird die Bolzenschweißpistole zuerst so auf das Werkstück aufgesetzt, daß die Spitze eines eingebrachten Schweißbolzens das Werkstück berührt. Hierauf wird dann der Schweißbolzen mit Hilfe einer elektromagnetischen Anordnung um einen vorgegebenen Hub zurückgezogen.

Nach Abschalten der elektromagnetischen Anordnung wird dann der Schweißkolben in Richtung auf das Werkstück so beschleunigt, daß durch den von der Druckfeder erzeugten Druck in der durch den Lichtbogen im Werkstück ausgebildeten Schmelze eine innige Verbindung zwischen dem Werkstück und dem Schweißbolzen hergestellt wird.

Bei den herkömmlichen Bolzenschweißpistolen muß, sobald Bolzen mit einem anderen Durchmesser verschweißt werden sollen, eine Bolzenhalteraufnahme ausgewechselt werden. Die Bolzenhalteraufnahme ist im allgemeinen mittels einer Sechskantschraube an dem Kolben gehalten und muß daher unter Zuhilfenahme eines Werkzeugs jeweils gelöst werden, und durch eine dem vorgesehenen Bolzendurchmesser angepaßte Bolzenhalteraufnahme ersetzt werden, die wiederum mittels einer Sechskantmutter an dem Kolben zu befestigen ist.

Ein derartiges Wechseln der Bolzenhalteraufnahme ist nicht nur mühsam, sondern auch ausgesprochen zeitaufwendig.

Ferner sind die bisher im Handel erhältlichen Bolzenschweißpistolen verhältnismäßig voluminös, haben ein verhältnismäßig hohes Gewicht und sind daher insgesamt verhältnismäßig unhandlich. Beispielsweise wirkt sich das Gewicht im Lauf der Zeit insbesondere dann sehr unangenehm aus, wenn viel über Kopf oder auch an aufrechtstehenden Teilen Bolzen aufgeschweißt werden müssen, da in solchen Fällen von der Bedienungsperson außer dem Druck, mit welchem die Pistole gegen das Werkstück ohnehin gedrückt werden muß, auch noch das oft nicht unbeachtliche Gewicht der Pistole kompensiert werden muß.

Ferner ist es in Abhängigkeit von den Materialien, die miteinander verschweißt werden sollen, nicht nur sinnvoll, sondern in vielen Fällen unbedingt erforderlich, daß der Federdruck geändert werden muß. Von der richtigen Einstellung des Federdrucks wird das Schweißergebnis in vielen Fällen sehr stark beeinflußt; d.h. von dem Federdruck hängt es in vielen Fällen ab, wie sicher und zuverlässig die Verbindung zwischen dem Bolzen und dem Werkstück ist.

Ferner muß in Abhängigkeit von den Materialeigenschaften des Werkstücks und des Bolzens der Hub unterschiedlich eingestellt werden, da die Auftreffgeschwindigkeit neben dem von der Druckfeder ausgeübten Staudruck noch wesentlich von der Auftreffgeschwindigkeit des Bolzens abhängt; letztere hängt im wesentlichen von dem Hub, d.h. von der Strecke ab, welche der Bolzen zurücklegt, bevor er in das durch den Lichtbogen im Werkstück ausgebildete Schmelbad eintaucht.

Bolzenschweißgeräte der eingangs genannten Art, bei welchen die Einstellung des Hubs durch einen axial verstellbaren Ankeranschlag erreichbar ist, ist beispielsweise aus der DE-OS 28 18 969 bekannt.

Eine andere Ausführung zur Einstellung des Hubs ist beispielsweise aus der europäischen Patentanmeldung 235 744 bekannt. Bedingt durch die Ausführung muß in dem einen Fall die Magnetspule eine entsprechend große Anzahl von Windungen aufweisen, was wiederum zur Folge hat, daß sie ein großes Gewicht hat und ein entsprechend großes Volumen aufweist. Bei der anderen Ausführung ist die Magnetspule verhältnismäßig klein ausgebildet, jedoch ist die Anordnung, um die Magnetspule mitsamt dem Anschlag zu verstellen, nicht nur verhältnismäßig aufwendig und groß, sondern dadurch bedingt auch wieder verhältnismäßig voluminös und nicht allzu leicht.

In beiden Fällen sind daher die Bolzenschweißpistolen insgesamt aufgrund ihres großen Volumens und des dadurch bedingten Gewichts relativ unhandlich und schwer, so daß die Handhabung bei dem Bedienungspersonal schnell zu starken Ermüdungserscheinungen führt.

Ferner weisen die meisten derzeit benutzten Bolzenschweißpistolen einen Schweißkolben aus Messing in Form eines einzigen Drehteils auf, das zur Aufnahme eines Bolzenhalters ausgebohrt und geschlitzt ist und zur Halterung der Sechskantmutter, mittels welcher die Bolzenhalteraufnahme im Schweißkolben zu befestigen ist, mit einem Außengewinde versehen ist.

Ferner ist beispielsweise bei der in der DE-OS 25 16 407 beschriebenen Bolzenschweißpistole der hintere Teil des Schweißkolbens entsprechend bearbeitet, damit er im Querschnitt rechteckig ist und auf seiner Oberseite eine etwa rechteckige Ausnehmung aufweist. Ferner sind an dem Ende des Schweißkolbens, an welchem eine einstellbare Druckfeder anliegt, ringförmige Verdickungen mit Anfasungen vorgesehen. Derartige Schweißkolben sind somit nicht nur in ihrer Herstellung sehr aufwendig und damit kostenintensiv, sondern haben aufgrund der Verwendung von Messing und aufgrund der Tatsache, daß sie ein aus dem Vollmaterial gearbeitetes Teil sind, ein beachtliches Gewicht.

Der Erfindung liegt daher die Aufgabe zugrunde, eine sehr leichte und damit handliche Bolzenschweißpistole zu schaffen, bei welcher die erforderlichen Einstellvorgänge genau und reproduzierbar durchführbar sind, und welche noch dazu in einfacher und schneller Weise wahlweise auf manuelle, halb- oder vollautomatische Bolzenzuführung umrüstbar ist.

Gemäß der Erfindung ist dies bei einer Bolzenschweißpistole nach dem Oberbegriff des Anspruchs 1 durch die Merkmale im kennzeichnenden Teil des Anspruchs 1 erreicht. Vorteilhafte Weiterbildungen der Erfindung sind Gegenstand der Unteransprüche.

Gemäß der Erfindung ist die Bolzenhalteraufnahme mittels einer Überwurfmutter schnell auswechselbar an dem Schweißkolben gehaltert, wobei zur Drehsicherung der Bolzenhalteraufnahme gegenüber dem Kolben von diesem zwei Stifte vorstehen, welche in zwei entsprechende Bohrungen in dem Bolzenaufnahmeteil eingreifen.

Wenn somit die erfindungsgemäße Bolzenschweißpistole auf Bolzen mit einem anderen Durchmesser umzurüsten ist, braucht lediglich die Überwurfmutter von Hand gelöst zu werden, und die Bolzenhalteraufnahme kann von dem Kolben abgezogen werden und durch eine neue, der zu verschweißenden Bolzengröße angepaßte Bolzenhalteraufnahme ersetzt werden. Hierzu brauchen auch nur wieder die beiden zur Drehsicherung vorgesehenen Stifte des Kolbens in die entsprechenden Bohrungen der Bolzenhalteraufnahme eingeführt zu werden und diese dann mittels der Überwurfmutter in axialer Richtung gegen die Kolbenstirnseite gepreßt zu werden.

Somit ist durch die erfindungsgemäße Ausführung eine drehsichere Verbindung zwischen Bolzenhalteraufnahme und Kolben und gleichzeitig eine sichere in axialer Richtung wirkende Anpressung der Bolzenhalteraufnahme an dem Kolben sichergestellt und damit ein einwandfreier Stromübergang vom Kolben zur Bolzenhalteraufnahme gewährleistet.

Ferner ist bei der erfindungsgemäßen Bolzenschweißpistole der verdrehungssicher im Gehäuse gehalterte Kolben als ein kreiszylindrischer Hohlkolben aus Aluminium ausgebildet, dessen Außenfläche hartanodisiert ist. Da aufgrund die Hartanodisierung nicht nur eine außerordentliche Härte in der Größenordnung von etwa 700 HV erreicht ist, sondern gleichzeitig eine Spannungsfestigkeit von bis etwa 5000 V gegeben ist, ist der an seiner Außenfläche hartanodisierte Aluminiumkolben in einer als Kugellager ausgebildeten Buchse geführt, wodurch eine extreme Leichtgängigkeit erreicht ist.

Obendrein ist durch das Vorsehen eines hartanodisierten Aluminiumkolbens, der noch dazu als Hohlkolben ausgebildet ist, dessen Gewicht gegenüber einem bisher üblichen und in entsprechenden Bolzenschweißpistolen vorgesehenen Messingkolben auf etwa ein Drittel des Gewichts reduziert.

Gemäß der Erfindung ist darüber hinaus mit dem Magnetanker ein symmetrisch zur Pistolenlängsachse ausgebildeter Stift starr verbunden bzw. dieser Stift und der Magnetanker sind als Einheit ausgebildet. An dem dem Magnetanker abgewandten Ende liegt dann an dem Stift ein vorzugsweise abgestuft ausgebildeter Federteller an, auf welchen die Druckfeder wirkt. Deren Druckkraft kann dann wiederum mittels eines im Pistolengehäuse drehbar gehalterten hohlzylinderförmigen Drehteils eingestellt werden. Somit kann bei der erfindungsgemäßen Bolzenschweißpistole nicht nur der Hub in einfacher und definierter Weise sondern zusätzlich auch noch die Druckkraft der Feder fein dosierbar eingestellt werden.

Gemäß einer bevorzugten Ausgestaltung der Erfindung kann für eine halb- oder vollautomatische Bolzenzuführung die Bolzenhalteraufnahme mit einem Bolzenzuführteil versehen sein, das unter spitzem Winkel zur Bolzenlängsachse mit Paßsitz in die Bolzenhalteraufnahme einsetzbar ist und somit auch entsprechend leicht ausgewechselt werden kann.

Wenn mit halbautomatischer Bolzenzuführung gearbeitet werden soll, kann die Bolzenhalteraufnahme so an dem Kolben angebracht werden, daß das Bolzenzuführteil beispielsweise nach oben von der Pistole absteht, so daß von Hand die Bolzen leicht in das Zuführteil eingebracht werden können.

Wenn dagegen die Bolzen vollautomatisch zugeführt werden sollen, kann gegebenenfalls die Bolzenhalteraufnahme um 180° bezüglich der Anordnung für halbautomatische Bolzenzuführung gedreht werden und in dieser Stellung an dem Kolben mittels der Überwurfmutter angebracht werden. Gleichzeitig wird am freien Ende des Bolzenzuführteils mittels einer Überwurfmutter der Schlauch angebracht, über welchen die Bolzen mittels Druckluft zugeführt werden.

Ein weiterer Vorteil des seitlich eingesetzten Bolzenzuführteils besteht darin, daß es in vielen Fällen bereits ausreicht, nur dieses Bolzenzuführteil gegebenenfalls bei einer Änderung des Bolzendurchmessers zu wechseln und nicht auch noch die eigentliche Bolzenhalteraufnahme. Die gesamte Bolzenhalteraufnahme muß immer dann gewechselt werden, wenn aufgrund der Abmessungen der Bolzen, d.h. bei einem Verhältnis vom Bolzendurchmesser zur Bolzenlänge von 1:2 bzw. 2,5 die Gefahr des Verkantens und damit Verklemmens eines Bolzens in der Bolzenhalteraufnahme zu befürchten ist.

Ferner ist gemäß einer weiteren vorteilhaften Ausgestaltung der Erfindung der zur Hubeinstellung bzw. -verstellung vorgesehene Anschlag in der elektromagnetischen Anordnung mit einer kreisförmigen Scheibe starr verbunden bzw. sind diese beiden Teile als Einheit ausgebildet. Um eine genau regulierbare Hubeinstellung oder -verstellung vorzunehmen, sind im Außenumfang der mit dem Anschlag starr verbundenen Scheibe in gleichmäßigen Abständen voneinander gleichmäßig über den Umfang verteilt eine Anzahl Einkerbungen vorgesehen.

Wenn beispielsweise der Anschlag bezüglich eines Magnetankers auf einem Schraubengewinde mit einer Ganghöhe von 1mm verdrehbar einstellbar ist, und im Umfang der erwähnten Scheibe gleichmäßig verteilt zehn Einkerbungen vorgesehen sind, entspricht eine Verdrehung um den Abstand zwischen zwei Einkerbungen einer Hubverstellung von 0,1mm.

Damit immer nur eine genau definierte Einstellung bzw. Verstellung des Hubs möglich ist, ist gemäß einer vorteilhaften Ausbildung der Erfindung im Pistolengehäuse auf Höhe der mit dem Anschlag fest verbundenen Scheibe ein Fenster vorgesehen, das parallel zum Außenumfang der Scheibe so bemessen ist, daß es nur etwa dem Abstand zwischen zwei Einkerbungen entspricht, so daß bei Einführen eines Schraubendrehers in eine der beiden am Rand des Fensters liegenden Kerben eine Verstellung um maximal 0,1 mm möglich ist.

Um jederzeit eine Kontrolle zu haben, welcher Abhub eingestellt ist, ist gemäß einer weiteren vorteilhaften Ausgestaltung der Erfindung im Inneren des Aluminium-Hohlkolbens ein Ablesestreifen angebracht, von welchem optisch oder auch magnetisch der jeweils eingestellte Hub abgenommen werden kann; dieser Wert ist dann über eine im Pistolengehäuse untergebrachte Digitalanzeige von außen ablesbar. Bei einer stationären Unterbringung der erfindungsgemäßen Bolzenschweißpistole kann die Digitalanzeige beispielsweise auch in dem Steuergerät untergebracht sein. In diesem Fall kann die digitale Anzeige des Hubs beispielsweise dadurch bewirkt werden, daß mittels eines Umschalters von der ohnehin vorgesehenen Spannungsanzeige auf die Hubanzeige umgeschaltet werden kann.

Nachfolgend wird die Erfindung anhand einer bevorzugten Ausführungsform unter Bezugnahme auf die anliegende Zeichnung im einzelnen beschrieben, in welcher schematisch und im Schnitt die wesentlichen Teile einer Bolzenschweißpistole gemäß der Erfindung dargestellt sind.

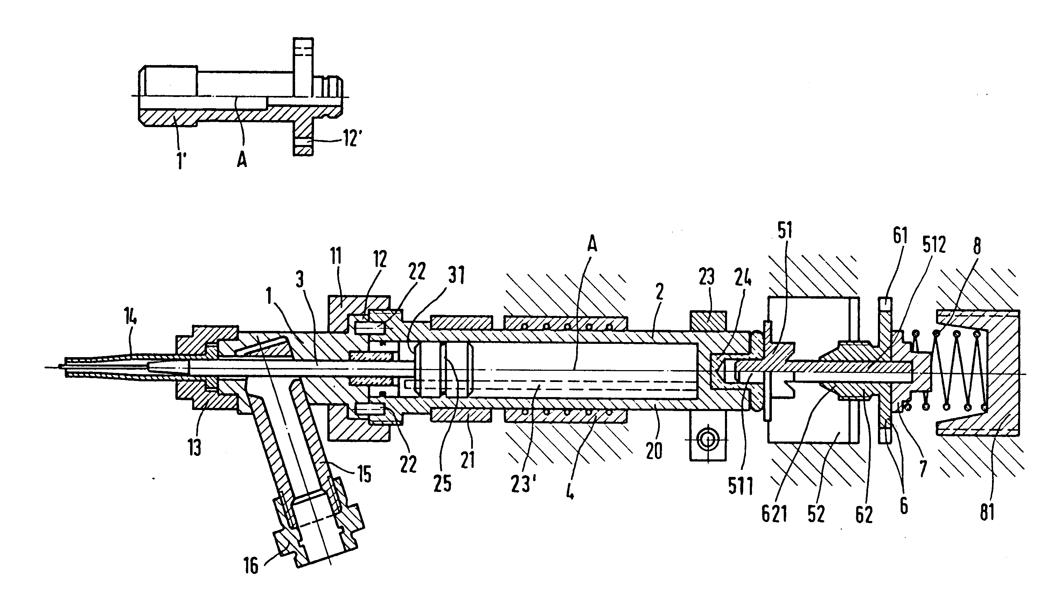

In der Zeichnung ist das Gehäuse der Bolzenschweißpistole lediglich durch eine Schrägschraffur beispielsweise in Höhe einer Führungsbuchse 4, einer Magnetspule 52 oder eines Druckfeder-Einstellteils 81 angedeutet.

In der im Gehäuse gehalterten, als Kugellager ausgebildeten Führung 4 ist ein Kolben 2 geführt, welcher mittels einer Verdrehsicherung 21 in nicht näher dargestellter Weise im Pistolengehäuse drehsicher gehaltert ist.

Am linksseitigen Ende des Kolbens 2 sind in diesen zwei Stifte 22 eingesetzt. In einer Bolzenhalteraufnahme 1 bzw. 1′ sind zur Aufnahme der Stifte entsprechende Bohrungen 12 bzw. 12′ ausgebildet. Am vorderen Ende der Bolzenhalteraufnahme ist mittels einer Sechskant- oder auch einer Überwurfmutter 13 ein Bolzenhalter 14 gehaltert. Die Bolzenhalteraufnahme 1 ist ihrerseits mittels einer Überwurfmutter 11 an dem Kolben 2 gehaltert. Hierbei dienen, wie eingangs bereits ausgeführt, die in die Bohrungen 12 eingeführten Stifte 22 als Drehsicherung, so daß mittels der Überwurfmutter nur noch eine sichere und zuverlässige Anpassung der Bolzenhalteraufnahme 1 an der Kolbenstirnseite zu gewährleisten ist.

In die Bolzenhalteraufnahme 1 ist ein in der Zeichnung nach unten wegstehendes Bolzenzuführteil mit Paßsitz eingesetzt. An dem der Bolzenhalteraufnahme 1 abgewandten Ende des Bolzenzuführteils 15 ist eine Überwurfmutter 16 aufgeschraubt, mittels welcher ein nicht näher dargestellter Schlauch zum Zuführen von Bolzen mit dem Bolzenzuführteil 15 verbunden wird.

Wie bereits eingangs erwähnt, kann die Bolzenhalteraufnahme 1 auch um 180° bezüglich der in der Zeichnung wiedergegebenen Stellung verdreht angebracht sein, so daß sie dann in der Zeichnung nach oben wegsteht. Diese Anbringung der Bolzenhalteraufnahme 1 und insbesondere des Bolzenzuführteils 15 ist in manchen Fällen zweckmäßig und zu bevorzugen, wenn beispielsweise der Schlauch zum Zuführen von Bolzen mittels Druckluft an dem Bolzenzuführteil nicht angebracht ist und einzelne Bolzen von Hand einzuwerfen sind.

Statt der Bolzenhalteraufnahme 1, welche für eine halb- oder vollautomatische Bolzenzuführung das Bolzenzuführteil 15 aufweists, kann auch die oberhalb der Bolzenhalteraufnahme 1 angeordnete, schematisch angedeutete Bolzenhalteraufnahme 1′ mittels einer Überwurfmutter 11 an dem Kolben 2 angebracht werden. Diese Bolzenhalteraufnahme 1′ wird verwendet, wenn eine manuelle Zuführung des Bolzens von vorne in einen nicht näher dargestellten Bolzenhalter einzubringen ist, welcher mittels einer der Sechskantmutter 13 entsprechenden Mutter an der Bolzenhalteraufnahme 1′ gehaltert und gesichert ist.

Im Inneren der Bolzenhalteraufnahme 1 ist symmetrisch zu Pistolenlängsachse A ein Einstoßkolben 3 dargestellt, welcher mit einem tellerförmigen Ansatz in dem als Hohlzylinder ausgebildeten Kolben 2 läuft. An dem Übergang von der Bolzenhalteraufnahme 1 zu dem Kolben 2 ist eine selbstschmierende Führungsbuchse aus Delrin (eingetragenes Warenzeichen) angedeutet. Hinter dem Teller 31 des Einstoßkolbens 3 ist in dem Kolben 2 ein Abstreifring 25 dargestellt, welcher zusammen mit dem Einstoßkolben hin- und herbewegt wird.

Ferner ist in dem Kolben 2 ein geschlossener Kanal 23′ dargestellt, der lediglich an seinen beiden Enden zum Kolbeninneren hin Luftaustrittsöffnungen aufweist.

Ferner ist an dem Kolben 2 ein Stromanschlußring 23 angebracht. Selbstverständlich ist die sonst durch Hartanodisierung gehärtete Oberfläche 20 des Kolbens 2 in dem Bereich, wo der Stromanschlußring vorgesehen ist, nicht hartanodisiert. An dem in der Zeichnung rechtsseitigen Ende des Kolbens 2 ist in diesen ein Einsatz 24 aus Isoliermaterial eingebracht, der mit einer ringförmigen Fläche auf dieser Stirnseite des Kolbens anliegt. In den Isoliereinsatz ist ein Ansatz 511 eines zur Pistolenlängsachse A symmetrischen Magnetankers 51 eingeschraubt. Gegenüber dem Ansatz 511 ist an dem Magnetanker 51 ein Stift 512 ausgebildet. Der Stift 512 läuft in einer Bohrung eines in einer Magnetspule 52 verdrehbar gehalterten Anschlags 62, welcher linksseitig in einen Konus 621 übergeht und an dessen anderem Ende eine kreisförmige Hubeinstellscheibe 6 ausgebildet ist, in deren Umfang gleichmäßig verteilt eine Anzahl Einkerbungen 61 ausgebildet ist. An dem rechtsseitigen Ende des Stifts 512 liegt in der Zeichnung ein abgestufter Federteller 7 an.

Auf den Federteller 7 wiederum drückt eine Druckfeder 8, deren Druckkraft mittels eines im Gehäuse verdrehbar gehalterten, als Hohlzylinder ausgebildeten Einstellteils 81 beaufschlagt wird.

Durch Verdrehen der Hubeinstellscheibe 6 in der eingangs geschilderten Weise, indem nämlich beispielsweise ein Schraubendreher in eine der Einkerbungen eingeführt wird, welche in dem nicht näher dargestellten, im Pistolengehäuse ausgebildeten Fenster angeordnet ist, kann der Anschlag 62 in Abhängigkeit von der Drehrichtung näher zu dem Magnetanker 51 bzw. zu der in dem Anker ausgebildeten kegelstumpfförmigen Ausnehmung verdreht werden. Auf diese Weise kann dann der gewünschte Hub in Schritten von beispielsweise 0,1mm eingestellt bzw. verstellt werden, wenn die Ganghöhe auf der Außenseite des Anschlags 62 beispielsweise 1mm beträgt und am Umfang der Hubeinstellscheibe 6 dann zehn Einkerbungen 61 vorgesehen sind.

Der gewünschte bzw. geforderte, mittels der Druckfeder 8 erzielbare Stauchdruck kann durch Verdrehen des Einstellteils 81 in der entsprechenden Richtung ebenfalls eingestellt werden.

In der Zeichnung ist schematisch derjenige Zustand der Bolzenschweißpistole dargestellt, in welchem der Kolben in etwa seinen maximalen Hub ausführen kann. Ferner ist der Zustand dargestellt, in welchem ein nicht dargestellter, in den Bolzenhalter 14 eingeführter Bolzen auf dem Werkstück aufsitzen würde. Wenn nun über einen nicht näher dargestellten Auslöser in bekannter Weise ein elektronischer Steuerschaltkreis geschlossen wird, wird die Magnetspule 52 erregt, wodurch dann der Magnetanker 51 nach hinten, d.h. in der Zeichnung nach rechts gezogen wird und damit ein nicht dargestellter Schweißbolzen vom Werkstück abgehoben würde.

Hierbei entspricht der Hub dann genau dem Weg der Magnetspule 52, bis diese auf den Konus 621 des Anschlags 62 auftrifft. Diese Bewegung wird entgegen der Kraft der Druckfeder 8 durchgeführt.

Sobald nunmehr der die Magnetspule 52 erregende Strom abgeschaltet wird, wird die Druckfeder 8 wirksam und drückt den Kolben 2 zusammen mit den in dem Bolzenhalter 14 eingesetzten Bolzen in das durch den Lichtbogen im Werkstück ausgebildete Schmelzbad.

Ist dann die Schweißpistole von dem aufgeschweißten Bolzen abgezogen, wird durch einen in zwei Richtungen wirkenden, nicht näher dargestellten Druckluftzylinder über das linksseitige Ende des im Hohlkolben 2 ausgebildeten Kanals Druckluft in das Kolbeninnere eingebracht, wodurch dann der Einstoßkolben in der Zeichnung nach rechts verschoben wird. Anschließend wird dann beispielsweise von Hand oder mittels Druckluft über das Bolzenzuführteil der nächste Bolzen in die Bolzenhalteraufnahme hineingedrückt und anschließend durch den Einstoßkolben in den Bolzenhalter verschoben.

Hierzu wird auf den Teller am rechten Rand des Einstoßkolbens die über die rechts liegende Öffnung des Kanals 23 ausströmende Druckluft geleitet.

## Patentansprüche

1. Bolzenschweißpistole zum Aufschweißen von Bolzen, mit einer Bolzenhalteraufnahme (1), mit einem in einem Pistolengehäuse verdrehungssicher gehalterten Kolben (2), mit einer Kolbenführung (4), mit einer Anordnung aus Magnetanker (51), Magnetspule (52) und verstellbarem Anschlag (62) zum Abheben eines Bolzens von einem Werkstück um einen vorgegebenen Hub, und mit einem Aufnahmeteil (7) für eine Druckfeder (8), dadurch **gekennzeichnet**, daß die Bolzenhalteraufnahme (1; 1'), zu deren Drehsicherung bezüglich des Kolbens (2) zwei von diesem vorstehende Stifte (22) in zwei entsprechende Bohrungen (12) in der Bolzenhalteraufnahme (1; 1') eingreifen, mittels einer Überwurfmutter (11) schnell auswechselbar an dem Kolben (2) gehaltert ist, daß der verdrehungssicher im Pistolengehäuse gehalterte Kolben (2) ein kreiszylindrischer Hohlkolben (2) aus Aluminium ist, dessen Außenfläche (20) hartanodisiert ist, und der (2) in einer als Kugellager ausgebildeten Buchse (4) geführt ist, und daß mit dem Magnetanker (51) ein symmetrisch zur Pistolenlängsachse (A) ausgebildeter Stift (512) verbunden ist, an dessen dem Magnetanker (51) abgewandten Ende als Aufnahmeteil für die Druckfeder ein abgestufter Federteller (7) anliegt, auf welchen die Druckfeder (8) wirkt, deren Druckkraft mittels eines im Pistolengehäuse drehbar gehalterten hohlzylinderförmigen Teils (81) einstellbar ist.

2. Bolzenschweißpistole nach Anspruch 1, dadurch **gekennzeichnet**, daß die Bolzenhalteraufnahme (1) für eine halb- oder vollautomatische Bolzenzuführung mit einem unter spitzem Winkel zur Pistolenlängsachse (A) mit Paßsitz eingesetzten, auswechselbaren Bolzenzuführteil (15) versehen ist.

3. Bolzenschweißpistole nach Anspruch 1, dadurch **gekennzeichnet**, daß zur Hubeinstellung oder -verstellung der Anschlag (621) mit einer Scheibe (6) starr verbunden ist, in deren Umfang gleichmäßig verteilt eine Anzahl Einkerbungen (61) ausgebildet sind.

4. Bolzenschweißpistole nach den Ansprüchen 1 und 3, dadurch **gekennzeichnet**, daß im Pistolengehäuse auf Höhe der mit dem Anschlag (621) fest verbundenen Scheibe (6) ein Fenster ausgebildet ist, das parallel zum Außenumfang der Scheibe (6) so bemessen ist, daß es nur etwa dem Abstand zwischen zwei Einkerbungen (61) entspricht.

5. Bolzenschweißpistole nach Anspruch 1, dadurch **gekennzeichnet**, daß zur digitalen Anzeige des Hubs im Inneren des Aluminium-Hohlkolbens (2) ein Ablesestreifen für eine optische oder magnetische Abnahme angebracht ist, und daß im Pistolengehäuse eine von außen ablesbare Digitalanzeige untergebracht ist.

## Claims

1. Stud welding gun for welding on studs, comprising a stud holder receiver (1), a piston (2) held secured against rotation in a gun housing, a piston guide (4), an arrangement of magnet armature (51), magnetic coil (52) and adjustable stop (62) for lifting a stud from a workpiece through a predetermined stroke, and a receiving member (7) for a pressure spring (8), characterized in that the stud holder receiver (1; 1'), for the securing of which against rotation with respect to the piston (2) two pins (22) projecting from said piston engage into two corresponding bores (12) in the stud holder receiver (1; 1'), is mounted rapidly exchangeably on the piston (2) by means of a cap nut (11), that the piston (2) mounted secured against rotation in the gun housing is a cylindrical hollow piston (2), the outer surface (20) of which is hard-anodized and which (2) is guided in a bush (4) formed as ball-bearing, and that a pin (512) formed symmetrically to the gun longitudinal axis (A) is connected to the magnet armature (51) and on the end thereof remote from the magnet armature (51) a stepped spring plate (7) bears as receiving member for the pressure spring, on which plate the pressure spring (8) acts, the pressure force of which is adjustable by means of a hollow cylindrical member (81) rotatably mounted in the gun housing.

2. Stud welding gun according to claim 1, characterized in that for semiautomatic or completely automatic stud supply the stud holder receiver (1) is connected to an exchangeable stud supply member (15) inserted at an acute angle to the stud longitudinal axis (A) with snug fit.

3. Stud welding gun according to claim 1, characterized in that for the stroke setting or adjustment the stop (621) is rigidly connected to a disc (6), in the periphery of which a plurality of notches (61) are formed uniformly distributed.

4. Stud welding gun according to claims 1 and 3, characterized in that in the stud housing at the level of the disc (6) fixedly connected to the stop (621) a window is formed which is so dimensioned parallel to the outer periphery of the disc (6) that it corresponds substantially only to the distance between two notches (61).

5. Stud welding gun according to claim 1, characterized in that for the digital display of the stroke in the interior of the aluminium hollow piston (2) a read strip is attached for an optical or magnetic pickup and that in the gun housing a digital display readable from the outside is accommodated.

## Revendications

1. Pistolet de soudage de goujons ou de soudage à l'arc par percussion ou pression pour le soudage de goujons, comportant un logement de maintenue ou de fixation de goujons, avec un piston (2) fixé de façon rigide en torsion dans un logement de pistolet, avec un guidage de piston (4) et un ensemble constitué par une armature d'aimant (51), une bobine magnétique (52) et une butée réglable pour le relevage d'un goujon d'une pièce à usiner sur une hauteur de levage prédéterminée et avec un élément de logement (7) pour un ressort de compression, caractérisé en ce que le logement de fixation de goujons (1 ; 1'), pour la fixation rigide en torsion duquel par rapport au piston (2) deux chevilles (22) faisant saillie par rapport à celui-ci s'engagent dans deux alésages correspondants (12) dans le logement de fixation de boulons (1 ; 1'), est fixé au moyen d'un écrou raccord (11) rapidement démontable sur le piston (2), en ce que le piston (2) fixé dans le logement de pistolet rigide en torsion est un piston creux (2) cylindrique circulaire en aluminium, dont la surface extérieure (20) est anodisée, et lequel piston (2) est guidé dans une douille (4) conçue comme palier à billes, et en ce qu'une cheville (512) conçue symétriquement par rapport à l'axe longitudinal du pistolet (A) est raccordée à l'armature d'aimant (51), sur l'extrémité détournée de l'armature d'aimant (51) duquel vient prendre appui une cuvette de ressort (7) en gradins servant d'élément de logement pour le ressort de compression, cuvette de ressort sur laquelle agit le ressort de compression (8), dont la force de compression peut être ajustée au moyen d'un élément cylindrique creux (81) maintenu de façon rotative dans le logement du pistolet.

2. Pistolet de soudage de goujons ou de soudage à l'arc par percussion ou pression selon la revendication 1, caractérisé en ce que le logement de fixation de goujons (1) destiné à l'amenée semi-automatique ou entièrement automatique des goujons est muni d'un élément d'amenée de goujons (15) amovible, présentant un ajustement fin agencé selon un angle aigu par rapport à l'axe longitudinal du pistolet (A).

3. Pistolet de soudage des goujons ou de soudage à l'arc par percussion ou pression selon la revendication 1, caractérisé en se que pour le réglage de la course de hauteur, la butée (621) est raccordée rigidement à une rondelle (6), dans la périphérie de laquelle sont formées de façon uniformément répartie une pluralité d'encoches (61).

4. Pistolet de soudage des goujons ou de soudage à l'arc par percussion ou pression selon les revendications 1 et 3, caractérisé en ce qu'une fenêtre est ménagée dans le logement du pistolet à hauteur de la rondelle (6) raccordée fixement à la butée (621), fenêtre qui parallèlement à la périphérie extérieure de la rondelle (6) est dimensionnée de façon à ne correspondre qu'à sensiblement la distance entre deux encoches (61).

5. Pistolet de soudage des goujons ou de soudage à l'arc par percussion selon le revendication 1, caractérisé en ce que pour l'affichage numérique de la course de levée dans la partie intérieure du piston creux en aluminium (2) est agencée une bande de lecture pour le relevé optique ou magnétique et en ce que dans le logement du pistolet est agencé un affichage numérique lisible de l'extérieur.
